# EUROPEAN PATENT APPLICATION

(11) **EP 4 542 033 A1**
(43) Date of publication of application: **23.04.2025**
(21) Application number: 24204204.2
(22) Date of filing: 02.10.2024
(51) Int. Cl.: F04B 23/06, F04B 51/00, G01N 30/32

(54) **LIQUID DELIVERY ABNORMALITY DIAGNOSIS METHOD AND LIQUID CHROMATOGRAPH**

(30) Priority: 16.10.2023 JP 2023178155
(71) Applicant: SHIMADZU CORPORATION, Kyoto-shi, Kyoto 604-8511 (JP)
(72) Inventor: KITAGAWA, Takaei, Kyoto-shi, Kyoto, 604-8511 (JP)
(74) Representative: Müller-Boré & Partner Patentanwälte PartG mbB

(57) **Abstract**

A sealing step of sealing a flow path (3) on an outlet side of a liquid delivery device (2) that performs continuous liquid delivery by complementarily interlocking a plurality of plunger pumps (16A; 16B); a liquid delivery step of causing the liquid delivery device (2) to perform liquid delivery at a preset diagnostic flow rate after the sealing step so that each of the plurality of plunger pumps (16A; 16B) performs at least one discharge operation; a recording step of recording a time change in the liquid delivery pressure while each of the plurality of plunger pumps (16A; 16B) executes the discharge operation during execution of the liquid delivery step; and a diagnosis step of diagnosing presence or absence of a liquid delivery abnormality during the discharge operation of each of the plurality of plunger pumps (16A; 16B) based on the behavior of the liquid delivery pressure recorded in the recording step are included.

## Description

### BACKGROUND OF THE INVENTION

### 1. Field of the Invention

The present invention relates to a liquid delivery abnormality diagnosis method and a liquid chromatograph.

### 2. Description of the Related Art

A liquid chromatograph performs analysis while delivering a liquid that is a mobile phase at an ultra-high pressure of several MPa to several hundred MPa. As a liquid delivery device used in such a liquid chromatograph, a device that complementarily interlocks a plurality of plunger pumps is common (see Patent Document 1). In each plunger pump, a sliding portion of a plunger reciprocating in one direction in a pump chamber is sealed with a sealing material (plunger seal), thereby preventing liquid leakage from the pump chamber under high pressure and securing slidability of the plunger. Furthermore, an inlet side and an outlet side of the pump chamber of each plunger are each provided with a check valve, a decrease in liquid delivery pressure during suction operation of each plunger pump is prevented, and stability of liquid delivery is secured.

### PRIOR ART DOCUMENT

### PATENT DOCUMENT

Patent Document 1: JP H5-272449 A

### SUMMARY OF THE INVENTION

The plunger seal is a consumable, liquid leakage from the pump chamber occurs when the plunger seal is worn, and a desired liquid delivery flow rate cannot be obtained even if the plunger is pushed into the pump chamber at a predetermined speed. Similarly, in the check valve, a check force decreases due to contamination or the like, and leakage (backflow) occurs, and a desired liquid delivery flow rate cannot be obtained. These phenomena considerably affect an analysis result in the liquid chromatograph, leading to a decrease in reliability of analysis. In a case where a leakage amount in the plunger seal and/or the check valve accounts for a certain proportion with respect to the liquid delivery flow rate, the user is likely to empirically notice a liquid delivery abnormality of the liquid delivery pump. On the other hand, when the leakage amount in the plunger seal and/or the check valve is very small with respect to the liquid delivery flow rate, it is difficult for the user to notice the liquid delivery abnormality of the liquid delivery device.

The present invention has been made in view of the above problems, and an object thereof is to facilitate recognition of presence or absence of a liquid delivery abnormality of a liquid delivery device.

A liquid delivery abnormality diagnosis method according to the present invention includes:
a sealing step of sealing a flow path on an outlet side of a liquid delivery device that performs continuous liquid delivery by complementarily interlocking a plurality of plunger pumps;
a liquid delivery step of causing the liquid delivery device to perform liquid delivery at a preset diagnostic flow rate after the sealing step so that each of the plurality of plunger pumps performs at least one discharge operation until liquid delivery pressure of the liquid delivery device reaches a predetermined pressure;
a recording step of recording a time change in the liquid delivery pressure while each of the plurality of plunger pumps executes the discharge operation during execution of the liquid delivery step;
and a diagnosis step of diagnosing presence or absence of a liquid delivery abnormality during the discharge operation of each of the plurality of plunger pumps based on the behavior of the liquid delivery pressure recorded in the recording step.

A liquid chromatograph according to the present invention includes:
a liquid delivery device that includes a plurality of plunger pumps and a pressure sensor, performs continuous liquid delivery of a mobile phase by complementarily interlocking the plurality of plunger pumps, and detects liquid delivery pressure by the pressure sensor;
an opening and closing mechanism for opening and closing a flow path on an outlet side of the liquid delivery device;
a controller configured, when a diagnostic mode is selected, to bring a flow path on the outlet side of the liquid delivery device into a state of being closed by the opening and closing mechanism and to cause the liquid delivery device to perform liquid delivery at a preset diagnostic flow rate so that each of the plurality of plunger pumps performs at least one discharge operation, by controlling operations of the liquid delivery device and the opening and closing mechanism;
a recording part that records behavior of the liquid delivery pressure while each of the plurality of plunger pumps executes the discharge operation during the diagnostic mode.

According to a liquid delivery abnormality diagnosis method of the present invention, a flow path on an outlet side of a liquid delivery device is sealed, the liquid delivery device is caused to perform liquid delivery at a preset diagnostic flow rate so that each of a plurality of plunger pumps of the liquid delivery device performs at least one discharge operation, and behavior of the liquid delivery pressure while each of the plurality of plunger pumps executes the discharge operation is recorded. When there is an abnormality such as leakage in a plunger seal and/or a check valve of any of the plunger pumps of the liquid delivery device, the liquid delivery pressure during the discharge operation of the plunger pump is less likely to increase as compared with that during the discharge operation of the other plunger pumps, and as a result, the liquid delivery pressure of the liquid delivery pressure does not linearly increase to a predetermined pressure. Therefore, the presence or absence of a liquid delivery abnormality during the discharge operation of each of the plurality of plunger pumps can be diagnosed based on the behavior of the liquid delivery pressure while each of the plurality of plunger pumps executes the discharge operation. Due to this, the user can easily recognize the presence or absence of the liquid delivery abnormality of the liquid delivery device.

According to a liquid chromatograph of the present invention, the liquid chromatograph is configured such that the flow path on the outlet side of the liquid delivery device can be opened and closed by an opening and closing mechanism, the flow path on the outlet side of the liquid delivery device is brought into a closed state by the opening and closing mechanism when a diagnostic mode is selected and the liquid delivery device is caused to perform liquid delivery at a preset diagnostic flow rate, each of the plurality of plunger pumps of the liquid delivery device is caused to perform at least one discharge operation, and during the diagnostic mode, behavior of the liquid delivery pressure while each of the plurality of plunger pumps executes the discharge operation is recorded, and therefore it is possible to diagnose the presence or absence of a liquid delivery abnormality during the discharge operation of each of the plurality of plunger pumps. By this, the user can easily recognize the presence or absence of the liquid delivery abnormality of the liquid delivery device.

### BRIEF DESCRIPTION OF THE DRAWINGS

FIG. 1 is a schematic configuration diagram showing an example of a liquid chromatograph;
FIG. 2 is a view showing an example of behavior of liquid delivery pressure during a diagnostic mode at normal time in which there is no leakage on any of a liquid delivery device and an outlet side of the liquid delivery device;
FIG. 3 is a view showing an example of behavior of liquid delivery pressure when a diagnostic flow rate is set to L1 in the diagnostic mode in a case where leakage occurs only in one pump;
FIG. 4 is a view showing an example of behavior of liquid delivery pressure when the diagnostic flow rate is set to L2 (> L1) in the diagnostic mode in a case where leakage occurs only in one pump;
FIG. 5 is a view showing an example of behavior of liquid delivery pressure when the diagnostic flow rate is set to L3 in the diagnostic mode in a case where leakage occurs in both pumps;
FIG. 6 is a view showing an example of behavior of liquid delivery pressure when the diagnostic flow rate is set to L4 in the diagnostic mode in a case where leakage occurs in both pumps;
FIG. 7 is a view showing an example of behavior of liquid delivery pressure when liquid leakage occurs on the pump and the outlet side of the liquid delivery device; and
FIG. 8 is a flowchart showing an example of a liquid delivery abnormality diagnostic procedure in the example.

### DETAILED DESCRIPTION OF THE INVENTION

Examples of a liquid delivery abnormality diagnosis method and a liquid chromatograph according to the present invention will be described below with reference to the drawings.

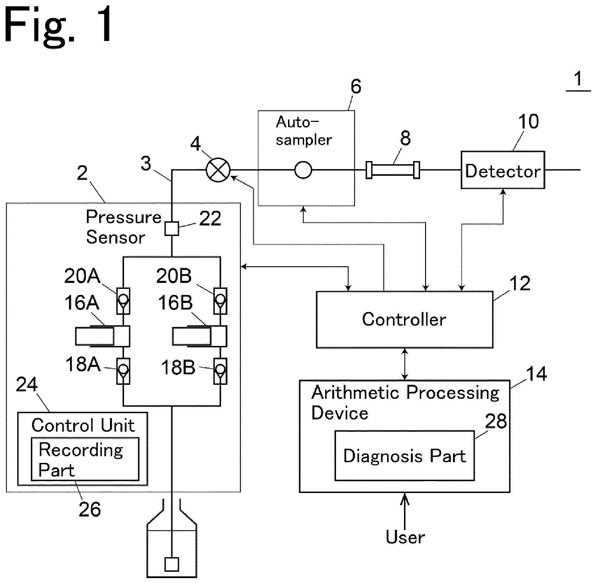

An example of a liquid chromatograph is shown in FIG. 1.

A liquid chromatograph 1 includes a liquid delivery device 2, an opening and closing valve 4 (opening and closing mechanism), an autosampler 6, a separation column 8, a detector 10, a controller 12, and an arithmetic processing device 14.

The liquid delivery device 2 includes two plunger pumps 16A and 16B, inlet side check valves 18A and 18B respectively provided on inlet sides of the plunger pumps 16A and 16B, outlet side check valves 20A and 20B respectively provided on outlet sides of the plunger pumps 16A and 16B, a pressure sensor 22 that detects liquid delivery pressure, and a control unit 24 that controls the operations of the plunger pumps 16A and 16B. The control unit 24 is implemented by an electronic circuit mounted with a central processing unit (CPU) and an information storage device.

The plunger pumps 16A and 16B are complementarily interlocked with each other such that while one plunger pump performs a suction operation of a mobile phase, the other plunger pump executes a discharge operation of the mobile phase to stably deliver the mobile phase at a set flow rate.

Note that in this example, the pressure sensor 22 is provided downstream of the outlet side check valves 20A and 20B to detect the liquid delivery pressure, but the function of the pressure sensor 22 may be implemented by a pressure sensor provided in each of the plunger pumps 16A and 16B to detect the pressure in a pump head of each of the plunger pumps 16A and 16B.

The opening and closing valve 4 is provided on an analysis flow path 3 through which the mobile phase delivered from the outlet of the liquid delivery device 2 flows. In this example, the opening and closing valve 4 is provided at a position between the liquid delivery device 2 and the autosampler 6 on the analysis flow path 3, and opens and closes the analysis flow path 3. The opening and closing valve 4 is brought into an open state at the time of analysis, and brought into a closed state at the time of a diagnostic mode described later to form a sealed system between the liquid delivery device 2 and the opening and closing valve 4.

On more downstream than the opening and closing valve 4, the analysis flow path 3 is provided with the autosampler 6, the separation column 8, and the detector 10 in order from the upstream side. The autosampler 6 injects a sample into the mobile phase flowing through the analysis flow path 3. The separation column 8 is for separating from each other components in the sample injected into the mobile phase by the autosampler 6. The detector 10 is for detecting each component separated by the separation column 8.

The controller 12 is for performing operation control of the liquid delivery device 2, the opening and closing valve 4, the autosampler 6, and the detector 10. The controller 12 can be implemented by a system controller dedicated to the liquid chromatograph or a computer into which software dedicated to the liquid chromatograph is introduced.

The arithmetic processing device 14 is a computer provided to be able to communicate with the controller 12. The arithmetic processing device 14 receives information input from the user, such as setting of an analysis condition, an instruction to start analysis, and selection of an operation mode.

The operation modes selectable by the user include a diagnostic mode. The diagnostic mode is a mode for diagnosing the presence or absence of a liquid delivery abnormality of the mobile phase and the cause thereof. Examples of the cause of the liquid delivery abnormality of the mobile phase include leakage inside each of the plunger pumps 16A and 16B of the liquid delivery device 2, mixture of bubbles, leakage at the inlet side check valves 18A and 18B and the outlet side check valves 20A and 20B, and leakage between the liquid delivery device 2 and the opening and closing valve 4.

As a function related to the diagnostic mode, the control unit 24 of the liquid delivery device 2 is provided with a recording part 26, and the arithmetic processing device 14 is provided with a diagnosis part 28. The control unit 24 constantly grasps what operation state (during discharge operation, during suction operation, and the like) each of the plunger pumps 16A and 16B is in. The recording part 26 is a function of recording behavior of the liquid delivery pressure detected by the pressure sensor 22 during the discharge operation of each of the plunger pumps 16A and 16B while monitoring the operation states of the plunger pumps 16A and 16B in the diagnostic mode. The behavior of the liquid delivery pressure recorded by the recording part 26 is an increase amount, a time change rate, and the like of the liquid delivery pressure during the discharge operation of each of the plunger pumps 16A and 16B. The diagnosis part 28 is a function of automatically diagnosing the presence or absence of an abnormality related to liquid delivery of the liquid delivery device 2 based on the behavior of the liquid delivery pressure during the diagnostic mode recorded by the recording part 26. The functions of the recording part 26 and the diagnosis part 28 are each obtained by the CPU executing a specific computer program.

Note that in this example, the recording part 26 is provided in the control unit 24, and the diagnosis part 28 is provided in the arithmetic processing device 14, but these functions may be implemented in any of the controller 12, the arithmetic processing device 14, and the control unit 24. In a case where the recording part 26 is implemented in the controller 12 or the arithmetic processing device 14, it is preferable that the control unit 24 transmits information regarding the operation states of the plunger pumps 16A and 16B together with a signal value of the pressure sensor 22 to the controller 12, and the recording part 26 can record the behavior of the liquid delivery pressure during the diagnostic mode and the operation states of the plunger pumps 16A and 16B in association with each other.

The diagnosis part 28 is not an essential component. The user may diagnose a liquid delivery abnormality based on the behavior of the liquid delivery pressure during the diagnostic mode recorded by the recording part 26. In a case where the user diagnoses the liquid delivery abnormality, the arithmetic processing device 14 preferably has a function of presenting the user with the behavior of the liquid delivery pressure during the diagnostic mode recorded by the function of the recording part 26 by displaying the behavior onto a display (not shown) communicably connected to the arithmetic processing device 14.

In the diagnostic mode, an upper limit value of the liquid delivery pressure and a diagnostic flow rate are set to diagnose the liquid delivery abnormality. The upper limit value of the liquid delivery pressure and the diagnostic flow rate can be arbitrarily set by the user or selected from options prepared in advance.

The upper limit value of the liquid delivery pressure is preferably set to a pressure at which it is desired to confirm to what degree of pressure liquid leakage does not occur in the plunger pumps 16A and 16B, the inlet side check valves 18A and 18B, and the outlet side check valves 20A and 20B of the liquid delivery device 2. The upper limit value of the liquid delivery pressure can be a maximum value of the liquid delivery pressure that can be reached during actual analysis, for example.

In order to be able to record the behavior of the liquid delivery pressure during the discharge operation of each of the plunger pumps 16A and 16B, each of the plunger pumps 16A and 16B needs to perform at least one discharge operation until the liquid delivery pressure during the diagnostic mode reaches the upper limit value. More preferably, each of the plunger pumps 16A and 16B is caused to perform the discharge operation a plurality of times until the liquid delivery pressure reaches the upper limit value. Although depending on the magnitude of the liquid delivery flow rate, in a case where liquid delivery is performed at a low flow rate of 100 µL/min in a state where the downstream side of the liquid delivery device 2 is sealed, how many times the plunger pumps 16A and 16B perform the discharge operation until the liquid delivery pressure reaches the upper limit value depends on a pump chamber capacity (volume of liquid that can be discharged in one discharge operation) of the plunger pumps 16A and 16B and an internal capacity from the liquid delivery device 2 to the sealing portion (the opening and closing valve 4 in this example). Therefore, in order to cause the plunger pumps 16A and 16B to perform a large number of discharge operations until the liquid delivery pressure reaches the upper limit value, it is necessary to secure a larger internal capacity between the liquid delivery device 2 and the sealing portion as compared with the pump chamber capacity of the plunger pumps 16A and 16B. Therefore, in order to secure a large internal capacity between the liquid delivery device 2 and the sealing portion, the opening and closing valve 4 may be disposed downstream of the autosampler 6.

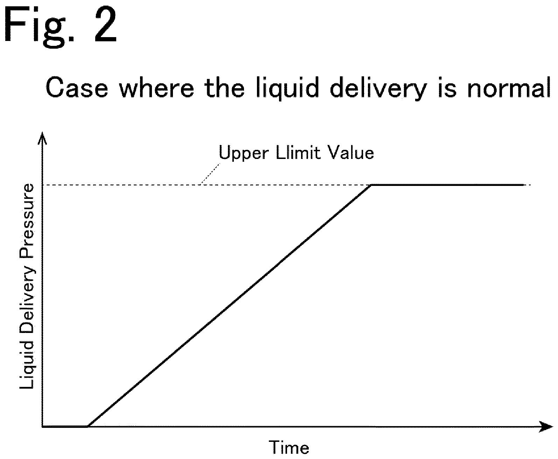

The diagnosis of a liquid delivery abnormality is performed based on a time change in liquid delivery pressure when the opening and closing valve 4 brings the analysis flow path 3 into a closed state and the liquid delivery device 2 is caused to perform liquid delivery at a diagnostic flow rate. In a case where there is no liquid delivery abnormality, as shown in FIG. 2, when the liquid delivery device 2 starts liquid delivery, the liquid delivery pressure increases substantially linearly and reaches a set upper limit value.

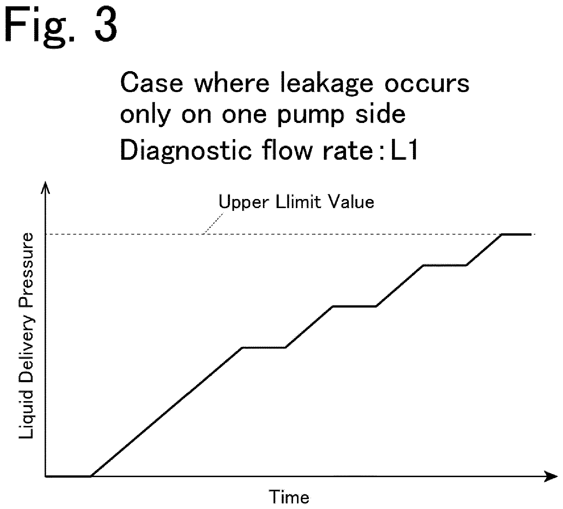

On the other hand, as shown in FIGS. 3 to 7, in a case where leakage occurs in at least any one of the plunger pump 16A side (inside of the plunger pump 16A and/or the inlet side check valve 18A) and the plunger pump 16B side (inside of the plunger pump 16B and/or the inlet side check valve 18B), the liquid delivery pressure hardly increases linearly to the upper limit value as in the normal time. For example, when leakage occurs only on one plunger pump side, an increase rate of the liquid delivery pressure while the plunger pump on the side where the leakage occurs performs the discharge operation is lower than an increase rate of the liquid delivery pressure while the plunger pump on the side where no leakage occurs performs the discharge operation. Even if leakage occurs on both sides of the two plunger pumps 16A and 16B, it is hardly possible that exactly the same amount of liquid leaks at exactly the same pressure on both sides, and therefore the waveform of the time change of the liquid delivery pressure does not become linear.

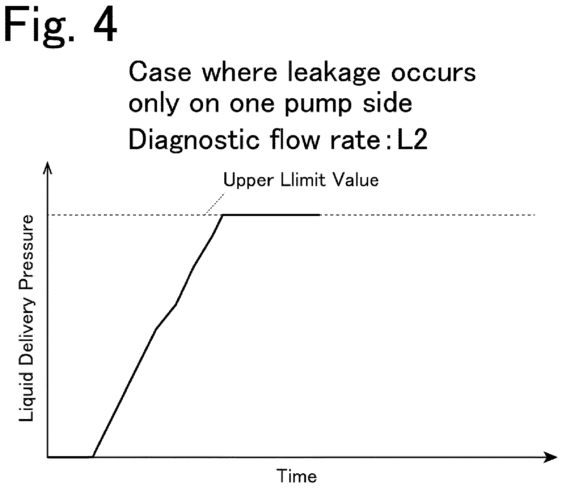

FIGS. 3 and 4 show examples of behavior of the liquid delivery pressure when the diagnostic flow rates are set to L1 and L2 (> L1), respectively, in a case where leakage occurs on one plunger pump side. L1 and L2 are on the order of several tens of µL/min.

As shown in FIG. 3, when the diagnostic flow rate is set to L1, the liquid delivery pressure during the discharge operation of the plunger pump in which leakage occurs does not increase at all when the liquid delivery pressure increases to some extent. This indicates that leakage occurs in this plunger pump at a pressure that does not increase, and a leakage amount at this plunger pump is larger than the diagnostic flow rate L1.

On the other hand, as shown in FIG. 4, when the diagnostic flow rate is set to L2 larger than L1, although the increase amount of the liquid delivery pressure during the discharge operation of the plunger pump in which leakage occurs is lower than the increase amount of the liquid delivery pressure during the discharge operation of the plunger pump in which no leakage occurs, the liquid delivery pressure increases also during the discharge operation of the plunger pump in which leakage occurs, and it is indicated that the leakage amount in the plunger pump is smaller than the diagnostic flow rate L2. As described above, since the information that can be acquired differs depending on the diagnostic flow rate, it is also possible to acquire detailed information on the liquid delivery abnormality by performing diagnosis at various diagnostic flow rates.

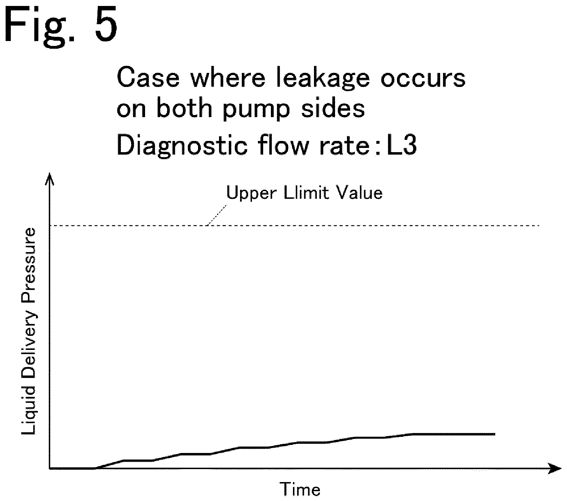

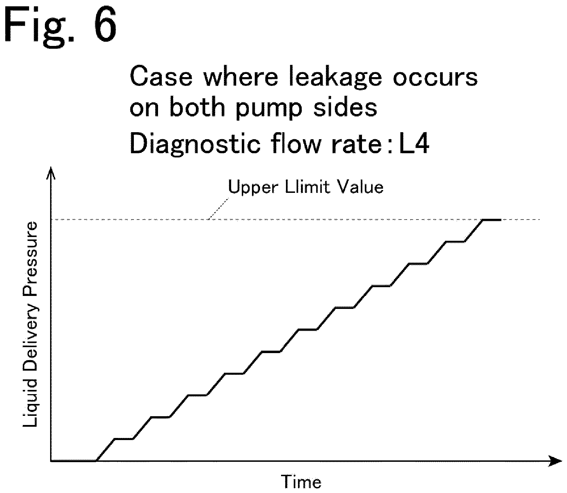

FIGS. 5 and 6 show examples of a time change in the liquid delivery pressure when the diagnostic flow rates are set to L3 and L4 (> L3), respectively, in a case where leakage occurs in both the plunger pumps 16A and 16B. L3 and L4 are on the order of several tens of µL/min.

As shown in FIG. 5, when the diagnostic flow rate is set to L3, the liquid delivery pressure hardly increases also during the discharge operation of any of the plunger pumps 16A and 16B, and the liquid delivery pressure does not reach the set upper limit value. This indicates that the maximum leakage amounts at the plunger pumps 16A and 16B are both larger than the diagnostic flow rate L3.

On the other hand, as shown in FIG. 6, when the diagnostic flow rate is set to L4 larger than L3, the liquid delivery pressure increases at the time of the discharge operation of the plunger pump with a small leakage amount, and therefore the liquid delivery pressure reaches the upper limit value. This indicates that the leakage amount on one plunger pump side is larger than L3 and smaller than L4.

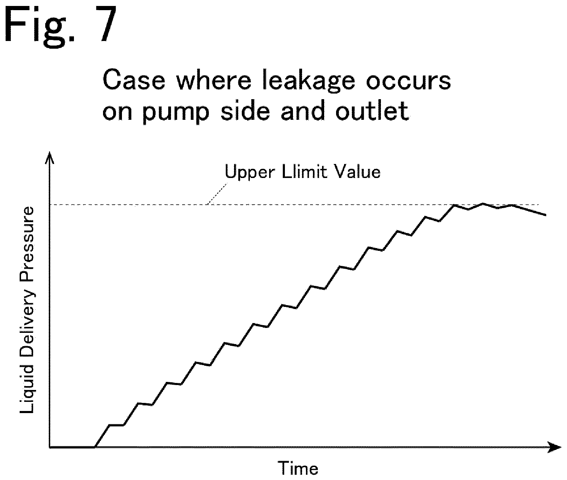

When leakage occurs on the outlet side (the outlet side check valve 20A, the outlet side check valve 20B, the opening and closing valve 4, and/or a pipe from the liquid delivery device 2 to the opening and closing valve 4) of the liquid delivery device 2, as shown in FIG. 7, sealing between the liquid delivery device 2 and the opening and closing valve 4 is not kept, and drop of the liquid delivery pressure occurs. In particular, when the plunger pump is stopped, the pressure cannot be maintained and decreases. When the drop of the liquid delivery pressure occurs in this manner, it can be diagnosed that leakage occurs in the outlet side check valve 20A, the outlet side check valve 20B, and/or the opening and closing valve 4, or loosening occurs in a connection portion of the pipe from the liquid delivery device 2 to the opening and closing valve 4.

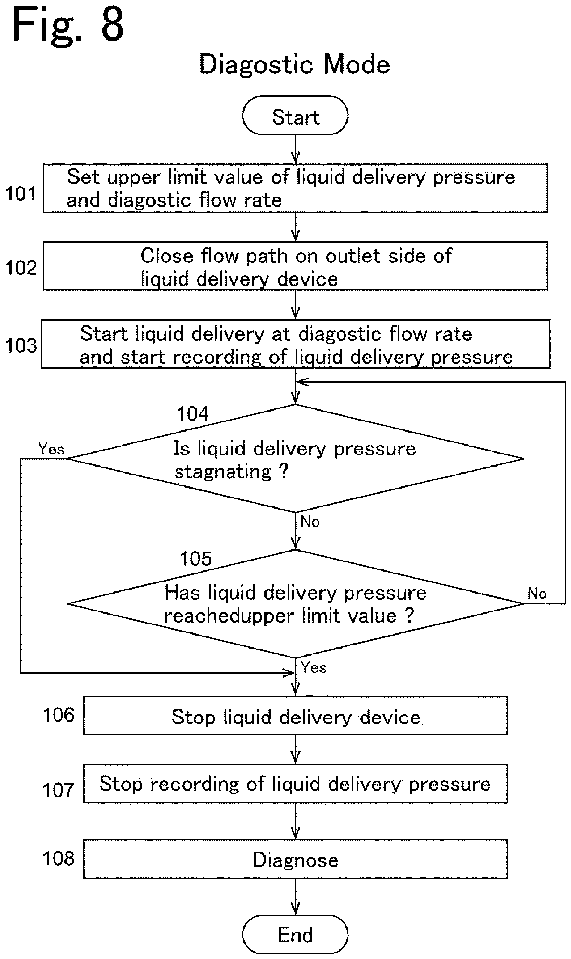

Next, an example of a liquid delivery abnormality diagnosis procedure using the diagnostic mode will be described using the flowchart of FIG. 8 together with FIG. 1.

When the user selects the diagnostic mode, the arithmetic processing device 14 causes the user to set the upper limit value of the liquid delivery pressure and the diagnostic flow rate (step 101). When the user sets the upper limit value of the liquid delivery pressure and the diagnostic flow rate, those pieces of information are transmitted to the controller 12, and the controller 12 closes the analysis flow path 3 by the opening and closing valve 4 (step 102), transmits a command to the control unit 24 to perform liquid delivery at the diagnostic flow rate, and causes the liquid delivery device 2 to operate (step 103). At this time, the recording part 26 starts recording of the behavior of the liquid delivery pressure detected by the pressure sensor 22.

The controller 12 monitors the liquid delivery pressure, and stops the liquid delivery by the liquid delivery device 2 when the liquid delivery pressure reaches a set upper limit value (steps 104 to 106). However, when a state where the increase rate of the liquid delivery pressure is equal to or less than a certain value (e.g., 0) continues for a certain period of time (e.g., time during which each of the plunger pumps 16A and 16B executes the discharge operation a certain number of times), the controller 12 determines that the liquid delivery pressure has stagnated (step 104: Yes), and stops the liquid delivery by the liquid delivery device 2 (step 106). This is because when leakage occurs on both the plunger pump 16A side and the plunger pump 16B side and both leakage amounts exceed the diagnostic flow rate, the liquid delivery pressure stagnates without increasing, and does not reach the set upper limit value.

After the liquid delivery by the liquid delivery device 2 is stopped, the recording part 26 stops recording the time change in the liquid delivery pressure (step 107). Thereafter, the diagnosis part 28 diagnoses the liquid delivery abnormality based on the behavior of the liquid delivery pressure recorded by the recording part 26, or the behavior of the liquid delivery pressure recorded by the recording part 26 is presented to the user, and the diagnosis of the liquid delivery abnormality by the user is performed (step 108).

Note that in the above example, an example in which the liquid delivery device 2 includes the two plunger pumps 16A and 16B has been described, but the present invention is not limited to this, and can be similarly applied to a case where the liquid delivery device 2 includes three or more plunger pumps. In the above example, the opening and closing valve 4 that opens and closes the flow path on the outlet side of the liquid delivery device 2 is provided between the liquid delivery device 2 and the autosampler 6, but an opening and closing mechanism having the same function as the opening and closing valve 4 may be provided inside the autosampler 6 or downstream of the autosampler 6. By providing such an opening and closing mechanism downstream of a needle seal and an injection valve of the autosampler 6, the diagnostic mode can be used for diagnosis of leakage and pressure resistance in the needle seal and the injection valve of the autosampler 6.

The examples described above are merely examples of embodiments of the liquid delivery abnormality diagnosis method and the liquid chromatograph according to the present invention. Embodiments of the liquid delivery abnormality diagnosis method and the liquid chromatograph according to the present invention are as follows.

In one embodiment of a liquid delivery abnormality diagnosis method according to the present invention includes:
a sealing step of sealing a flow path on an outlet side of a liquid delivery device that performs continuous liquid delivery by complementarily interlocking a plurality of plunger pumps;
a liquid delivery step of causing the liquid delivery device to perform liquid delivery at a preset diagnostic flow rate after the sealing step so that each of the plurality of plunger pumps performs at least one discharge operation;
a recording step of recording behavior of liquid delivery pressure of the liquid delivery device while each of the plurality of plunger pumps executes the discharge operation during execution of the liquid delivery step; and
a diagnosis step of diagnosing presence or absence of a liquid delivery abnormality during the discharge operation of each of the plurality of plunger pumps based on the behavior of the liquid delivery pressure recorded in the recording step.

In aspect [1] of the one embodiment of the liquid delivery abnormality diagnosis method, in the liquid delivery step, the liquid delivery device is caused to perform liquid delivery until the liquid delivery pressure reaches a preset upper limit value.

Aspect [2] of the one embodiment of the liquid delivery abnormality diagnosis method includes a setting step of setting the diagnostic flow rate before the liquid delivery step. This aspect [2] can be combined with aspect [1] described above.

In aspect [3] of the one embodiment of the liquid delivery abnormality diagnosis method, in the diagnosis step, presence of a liquid delivery abnormality is diagnosed during the discharge operation of a plunger pump having a lowest increase amount in the liquid delivery pressure during the discharge operation among the plurality of plunger pumps. This aspect [3] can be combined with aspect [1] and/or [2] described above.

In aspect [4] of the one embodiment of the liquid delivery abnormality diagnosis method, in the diagnosis step, it is diagnosed that liquid leakage occurs between the liquid delivery device and a sealed position on an outlet side of the liquid delivery device when the liquid delivery pressure drops. This aspect [4] can be combined with aspect [1], [2], and/or [3] described above.

In aspect [5] of the one embodiment of the liquid delivery abnormality diagnosis method, in the liquid delivery step, each of the plurality of plunger pumps is caused to perform the discharge operation a plurality of times, and in the diagnosis step, for each of the plurality of plunger pumps, pressure resistance of the plunger pump is diagnosed based on the liquid delivery pressure when an increase amount of the liquid delivery pressure during the discharge operation is lower than an increase amount of the liquid delivery pressure during the discharge operation of previous time. This aspect [5] can be combined with aspect [1], [2], [3], and/or [4] described above.

One embodiment of a liquid chromatograph according to the present invention includes:
a liquid delivery device that includes a plurality of plunger pumps and a pressure sensor, performs continuous liquid delivery of a mobile phase by complementarily interlocking the plurality of plunger pumps, and detects liquid delivery pressure by the pressure sensor;
an opening and closing mechanism for opening and closing a flow path on an outlet side of the liquid delivery device;
a controller configured, when a diagnostic mode is selected, to bring a flow path on the outlet side of the liquid delivery device into a state of being closed by the opening and closing mechanism and to cause the liquid delivery device to perform liquid delivery at a preset diagnostic flow rate so that each of the plurality of plunger pumps to performs at least one discharge operation, by controlling operations of the liquid delivery device and the opening and closing mechanism;
a recording part that records behavior of the liquid delivery pressure while each of the plurality of plunger pumps executes the discharge operation during the diagnostic mode.

In aspect [1] of the one embodiment of the liquid chromatograph, the controller is configured to cause the liquid delivery device to perform liquid delivery until the liquid delivery pressure reaches a preset upper limit value in the diagnostic mode.

In aspect [2] of the one embodiment of the liquid chromatograph, the diagnostic flow rate is a flow rate set by a user. This aspect [2] can be combined with aspect [1] described above.

Aspect [3] of the one embodiment of the liquid chromatograph includes a diagnosis part configured to diagnose presence or absence of a liquid delivery abnormality during the discharge operation of each of the plurality of plunger pumps based on the behavior of the liquid delivery pressure recorded by the recording part. This aspect [3] can be combined with aspect [1] and/or [2] described above.

In the above aspect [3], the diagnosis part can be configured to diagnose presence of a liquid delivery abnormality during the discharge operation of a plunger pump having a lowest increase amount in the liquid delivery pressure during the discharge operation in the diagnostic mode among the plurality of plunger pumps.

In the above aspect [3], the diagnosis part can be configured to diagnose that liquid leakage occurs between the liquid delivery device and the opening and closing mechanism when the liquid delivery pressure drops in the diagnostic mode.

In aspect [4] of the one embodiment of the liquid chromatograph, in the diagnostic mode, each of the plurality of plunger pumps is caused to perform the discharge operation a plurality of times. This aspect [4] can be combined with aspect [1], [2], and/or [3] described above.

In the above aspect [4], the diagnosis part can be configured to diagnose, for each of the plurality of plunger pumps, pressure resistance of the plunger pump based on the liquid delivery pressure when an increase amount of the liquid delivery pressure during the discharge operation is lower than an increase amount of the liquid delivery pressure during the discharge operation of previous time.

### DESCRIPTION OF REFERENCE SIGNS

- 1: liquid chromatograph
- 2: liquid delivery device
- 3: analysis flow path
- 4: switching valve
- 6: autosampler
- 8: separation column
- 10: detector
- 12: controller
- 14: arithmetic processing device
- 16A; 16B: plunger pump
- 18A; 18B: inlet side check valve
- 20A; 20B: outlet side check valve
- 22: pressure sensor
- 24: recording part
- 26: diagnosis part

## Claims

1. A liquid delivery abnormality diagnosis method comprising:
a sealing step of sealing a flow path on an outlet side of a liquid delivery device that performs continuous liquid delivery by complementarily interlocking a plurality of plunger pumps;
a liquid delivery step of causing the liquid delivery device to perform liquid delivery at a preset diagnostic flow rate after the sealing step so that each of the plurality of plunger pumps performs at least one discharge operation;
a recording step of recording behavior of liquid delivery pressure of the liquid delivery device while each of the plurality of plunger pumps executes the discharge operation during execution of the liquid delivery step;
and a diagnosis step of diagnosing presence or absence of a liquid delivery abnormality during the discharge operation of each of the plurality of plunger pumps based on the behavior of the liquid delivery pressure recorded in the recording step.

2. The liquid delivery abnormality diagnosis method according to claim 1, wherein in the liquid delivery step, the liquid delivery device is caused to perform liquid delivery until the liquid delivery pressure reaches a preset upper limit value.

3. The liquid delivery abnormality diagnosis method according to claim 1, further comprising a setting step of setting the diagnostic flow rate before the liquid delivery step.

4. The liquid delivery abnormality diagnosis method according to claim 1, wherein in the diagnosis step, presence of a liquid delivery abnormality is diagnosed during the discharge operation of a plunger pump having a lowest increase amount in the liquid delivery pressure during the discharge operation among the plurality of plunger pumps.

5. The liquid delivery abnormality diagnosis method according to claim 1, wherein in the diagnosis step, it is diagnosed that liquid leakage occurs between the liquid delivery device and a sealed position on an outlet side of the liquid delivery device when the liquid delivery pressure drops.

6. The liquid delivery abnormality diagnosis method according to claim 1, wherein
in the liquid delivery step, each of the plurality of plunger pumps is caused to perform the discharge operation a plurality of times, and
in the diagnosis step, for each of the plurality of plunger pumps, pressure resistance of the plunger pump is diagnosed based on the liquid delivery pressure when an increase amount of the liquid delivery pressure during the discharge operation is lower than an increase amount of the liquid delivery pressure during the discharge operation of previous time.

7. A liquid chromatograph comprising:
a liquid delivery device that includes a plurality of plunger pumps and a pressure sensor, performs continuous liquid delivery of a mobile phase by complementarily interlocking the plurality of plunger pumps, and detects liquid delivery pressure by the pressure sensor;
an opening and closing mechanism for opening and closing a flow path on an outlet side of the liquid delivery device;
a controller configured, when a diagnostic mode is selected, to bring a flow path on the outlet side of the liquid delivery device into a state of being closed by the opening and closing mechanism and to cause the liquid delivery device to perform liquid delivery at a preset diagnostic flow rate so that each of the plurality of plunger pumps performs at least one discharge operation, by controlling operations of the liquid delivery device and the opening and closing mechanism; and
a recording part that records behavior of the liquid delivery pressure while each of the plurality of plunger pumps executes the discharge operation during the diagnostic mode.

8. The liquid chromatograph according to claim 7, wherein the controller is configured to cause the liquid delivery device to perform liquid delivery until the liquid delivery pressure reaches a preset upper limit value in the diagnostic mode.

9. The liquid chromatograph according to claim 7, wherein the diagnostic flow rate is a flow rate set by a user.

10. The liquid chromatograph according to claim 7, further comprising a diagnosis part configured to diagnose presence or absence of a liquid delivery abnormality during the discharge operation of each of the plurality of plunger pumps based on the behavior of the liquid delivery pressure recorded by the recording part.

11. The liquid chromatograph according to claim 10, wherein the diagnosis part is configured to diagnose presence of a liquid delivery abnormality during the discharge operation of a plunger pump having a lowest increase amount in the liquid delivery pressure during the discharge operation in the diagnostic mode among the plurality of plunger pumps.

12. The liquid chromatograph according to claim 10, wherein the diagnosis part is configured to diagnose that liquid leakage occurs between the liquid delivery device and the opening and closing mechanism when the liquid delivery pressure drops in the diagnostic mode.

13. The liquid chromatograph according to claim 8, wherein in the diagnostic mode, each of the plurality of plunger pumps is caused to perform the discharge operation a plurality of times.

14. The liquid chromatograph according to claim 13, wherein the diagnosis part is configured to diagnose, for each of the plurality of plunger pumps, pressure resistance of the plunger pump based on the liquid delivery pressure when an increase amount of the liquid delivery pressure during the discharge operation is lower than an increase amount of the liquid delivery pressure during the discharge operation of previous time.
